# EUROPÄISCHE PATENTSCHRIFT

(11) **EP 3 296 192 B1**
(45) Veröffentlichungstag und Bekanntmachung des Hinweises auf die Patenterteilung: **03.07.2019**
(21) Anmeldenummer: 17001521.8
(22) Anmeldetag: 12.09.2017
(51) Int. Cl.: B63B 1/32, B63B 1/06

(54) **AUFTREFFKRAFT REDUZIERENDER STRÖMUNGSUMLENKER FÜR DIE ANGESTRÖMTE GRUNDFLÄCHE VON STRÖMUNGSKÖRPERN**
IMPACT-REDUCING FLOW DEFLECTOR FOR THE SURFACE OF FLOW BODIES IMPACTED BY THE FLOW
DÉFLECTEUR D'ÉCOULEMENT RÉDUISANT LA FORCE D'IMPACT POUR L'AIRE DE BASE CÔTÉ ARRIVÉE DU FLUX DU CORPS D'ÉCOULEMENT

(30) Priorität: 15.09.2016 DE 202016005658 U
(43) Veröffentlichungstag der Anmeldung: 21.03.2018
(73) Patentinhaber: Willmann, Klaus, 33039 Nieheim (DE)
(72) Erfinder: Willmann, Klaus, 33039 Nieheim (DE)
(74) Vertreter: Wettlaufer, Frank

(56) Entgegenhaltungen:
- EP-A1- 3 036 153
- WO-A1-91/01248
- WO-A1-2013/011332
- DE-A1- 3 045 977
- DE-U1-202007 014 781
- GB-A- 373 970
- JP-A- 2002 316 687

## Beschreibung

Die Erfindung betrifft einen Strömungskörper mit einer Grundfläche, welche für Strömungsmedien einen Strömungswiderstand bildet.

Derartige Strömungskörper sind an Wasserfahrzeugen angeordnet, wobei hier an den Bugbereich des Wasserfahrzeuges gedacht ist. Das Strömungsmedium ist Wasser, wobei der Bug des Wasserfahrzeuges den Strömungswiderstand bildet. Es sind unterschiedlichste Bauformen des Bugs bekannt. Dessen Strömungswiderstand ist jedoch mitverantwortlich für die aufzubringende Energie um das Wasserfahrzeug in dem Medium fortzubewegen. Wasserfahrzeuge sind im Allgemeinen bekannt und beispielsweise Wind- und/oder Motorbetrieben.

Wasserfahrzeuge mit Strömungsumlenkern sind beispielsweise in GB373970 beschrieben. Bei diesem Wasserfahrzeug sind mehrere Strömungsumlenker entlang eines Schiffsrumpf angeordnet.

DE3045977 beschreibt ein anderes Wasserfahrzeug mit Strömungsumlenkern und schlägt ein Abstandsverhältnis von Strömungsumlenker zu Wasserfahrzeug vor.

Obgleich der Bug möglichst so konstruiert ist, dass ein möglichst geringer Strömungswiderstand erzeugt wird, bietet die Gestaltung von derartigen Anströmflächen hinsichtlich der Reduzierung der aufzubringenden Bewegungsenergie durchaus noch Raum für Verbesserungen.

Der Erfindung liegt die Aufgabe zugrunde, ein Wasserfahrzeug mit einer Grundfläche der Eingangs genannten Art (Bug), mit einfachen Mitteln so zu verbessern bzw. zu schaffen, dass das damit verbundene Wasserfahrzeug einen reduzierten Energieverbrauch zur Fortbewegung aufweist.

Erfindungsgemäß wird die Aufgabe durch ein Wasserfahrzeug mit den Merkmalen des Anspruchs 1 gelöst.

Gemäß der Erfindung wird ein Wasserfahrzeug mit einem Bug welcher für Strömungsmedien einen Strömungswiderstand bildet vorgeschlagen, an dessen Bug Strömungsumlenker angeordnet sind welche an ihrer Einströmseite einen größeren Abstand zum Bug aufweisen als als an ihrer Ausströmseite. Für das Medium Wasser ist vorgesehen, dass der Abstand des zumindest einen Strömungsumlenkers zur Grundfläche an der Einströmseite doppelt so groß wie der Abstand des Strömungsumlenkers zur Grundfläche an der Ausströmseite ist.

Die Einströmseite des Strömungsumlenkers ist diejenige Seite welche in Strömungsrichtung des Mediums gesehen angeordnet ist, wobei die Ausströmseite dazu gegenüberliegend angeordnet ist. Das Medium strömt so zwischen der Innenseite des Strömungsumlenkers und der Grundfläche des Körpers entlang. So wird erreicht, dass das Medium nicht mehr direkt auf die Grundfläche auftrifft. Die Medienströmung wird vielmehr parallel zur Grundfläche umgeleitet, so dass der Strömungswiderstand verringert wird. So ist eine Reduzierung der aufzubringenden Vorschubenergie zu erwarten. Auch wird die effektive Auftreffkraft des Mediums auf die Grundfläche reduziert, da das Medium nicht mehr direkt auf die Grundfläche auftrifft. Die Auftreffkraft kann, bezogen auf einen Strömungskörper ohne Strömungsumlenker, quasi halbiert werden, woraus eine Reduzierung des Strömungswiderstandes beispielsweise um 28% resultieren kann.

Gemäß der Erfindung weist der Strömungsumlenker einen viereckigen Querschnitt auf. Wobei der Strömungsumlenker in einer bevorzugten Ausgestaltung breiter ist als dick, aber länger als breit. In zweckmäßiger Ausgestaltung weist der Strömungsumlenker ein Strömungsprofil auf, welches in seiner Längserstreckung gesehen bevorzugt unverändert ist. In seiner Quererstreckung kann das Strömungsprofil natürlich einen veränderlichen Querschnitt aufweisen. Der Begriff Längserstreckung meint im Sinne der Erfindung die Erstreckung in Längsrichtung des Strömungsumlenkers. Die Quererstreckung ist dann senkrecht dazu gemeint.

Der Strömungskörper ist ein Wasserfahrzeug mit einem Bug und weist einen Mittelbereich auf. Gemäß der Erfindung sind an dem Strömungskörper mehr als ein Strömungsumlenker pro Seite des Strömungskörpers, also rechts und links bezogen auf dessen Mittelbereich angeordnet. In bevorzugter Ausgestaltung sind zwei, weiter bevorzugt drei Strömungsumlenker pro Seite des Strömungskörpers, also rechts und links bezogen auf dessen Mittelbereich angeordnet. Natürlich können auch mehr als drei Strömungsumlenker pro Seite des Strömungskörpers, also rechts und links bezogen auf dessen Mittelbereich angeordnet sein.

Gemäß der Erfindung erstrecken sich die an dem Bug angeordneten Strömungsumlenker von oben nach unten. Oben meint im Sinne der Erfindung bei einem Wasserfahrzeug das sich die Strömungsumlenker aus der Richtung eines Schiffsdecks in Richtung zu einem Schiffsrumpf erstrecken. Selbstverständlich ist der Strömungsumlenker überwiegend, bevorzugt vollständig unter der Wasseroberfläche verlaufend angeordnet. Idealer Weise ist dabei vorgesehen, dass sich der Strömungsumlenker an einem Bug des Wasserfahrzeuges so orientiert, dass dieser an jeder Stelle senkrecht zur Hauptströmungsrichtung des Mediums ist.

Die Hauptströmungsrichtung des Mediums meint im Sinne der Erfindung die resultierende Strömung, welche sich aufgrund der Profilierung des Bugs. Trifft das Medium auf den Grundkörper auf, wird das Medium so quasi von der Mittellinie des Grundkörpers nach außen und gleichzeitig nach unten verdrängt.

Die Strömungsumlenker sind Blechprofile, also aus einem Metallblech oder einem Leichtmetallblech, wie z.B. einem Aluminiumblech oder Magnesiumblech hergestellt. Diese Werkstoffe eignen sich ganz besonders um das für das Medium am besten geeignete Strömungsprofil zu erstellen, welches, wie oben erwähnt, in Strömungsversuchen ermittelbar ist. Leichtmetallbleche bieten sich aufgrund des geringen Gewichts an. Denkbar ist aber auch, den jeweiligen Strömungsumlenker aus einem Kunststoff und/oder aus einem faserverstärkten Kunststoff zu bilden.

Die Strömungsumlenker sind in vorteilhafter Ausgestaltung der Erfindung mittels Befestigungsstegen an dem Wasserfahrzeug, also am Bug angebunden. In idealer Ausgestaltung ist dabei ein Befestigungssteg an einem Ende des Strömungsumlenkers und an dem dazu gegenüberliegenden Ende des Strömungsumlenkers angeordnet. Natürlich können auch entlang der Längserstreckung des Strömungsumlenkers noch Zwischenbefestigungselemente vorgesehen sein. Über die Befestigungsstege ist jeder Strömungsumlenker gemäß der Erfindung in seinem Anstellwinkel zur Grundfläche veränderbar. In einer möglichen Ausgestaltung ist ein Drehpunkt an der Ausströmseite vorgesehen, wobei an der Einströmseite ein Langloch angeordnet ist, so dass der Strömungsumlenker in seinem Anstellwinkel verstellbar ist. Dies ist zwar möglicherweise nur einmal erforderlich, jedoch mittels der Erfindung ohne Probleme möglich. Möglich ist auch einen geeigneten Aktuator vorzusehen, also zum Beispiel ein Elektromotor, welcher auf entsprechenden Verstellelemente wirken könnte. Die Befestigungsstege können auch in Ihrer Längsrichtung einstellbar, also quasi teleskopartig ein- und ausfahrbar sein, so dass das Abstandsverhältnis anpassbar ist. Zudem kann ein Gelenk zwischen dem Befestigungselement und dem Strömungsumlenker, aber auch zwischen dem Befestigungselement und dem Bug angeordnet sein, so dass der Strömungsumlenker in Querrichtung verstellbar ist. In weiter möglicher Ausgestaltung kann vorgesehen sein, den Strömungsumlenker in seiner Längserstreckung aus mehreren Einzelsegmenten zu bilden, welche aneinander gereiht den idealen Strömungsumlenker bilden. Jedes der einzelnen Segmente ist sinnvoller Weise einstellbar, wobei an der jeweiligen Verbindungsstelle beispielsweise ein Drehlager angeordnet ist. Mittels des an den Befestigungsstegen einstellbar gelagerten Strömungsumlenkers sind die Abstandsverhältnisse veränderbar, wobei aber auch die Wirkrichtung umkehrbar ist. Die Umkehrung der Wirkrichtung ist sinnvoll, wenn z.B. zwei Wasserfahrzeuge, also zum Beispiel mehrere Schuten, also zum Beispiel zwei Schuten nebeneinander angeordnet sind. Bei einer Standardschute zum Beispiel, welche eine durchgehende Bugwölbung hat, ist es zielführend, wenn der zumindest eine Strömungsumlenker aus mehreren, einstellbaren Teilsegmenten besteht. So kann bei Bedarf der Anstellwinkel so verändert werden, dass bei parallel gekoppelten Standardschuten die jeweils zur Mitte der beiden Schuten liegenden Strömungsumlenker in ihrer Wirkrichtung umgekehrt werden können. Dabei sind die jeweiligen Strömungsumlenker so einstellbar, dass dieser Schubverbund den, bezogen auf eine Ausgestaltung ohne erfindungsgemäßen Strömungsumlenker, geringsten Strömungswiderstand hat. Bei einem Schubverbund mit nebeneinander angeordneten Schuten wird im Sinne angenommen, dass die Hauptströmungsrichtung der rechten Schute auch nach rechts orientiert ist, wobei die Hauptströmungsrichtung der linken Schute zur linken Seite orientiert ist. Die vorher besagte Mittellinie ist dann die Trennlinie der beiden Schuten. Möglich ist es also, die Strömungsumlenker der jeweiligen Schute so einzustellen, dass die Hauptströmungsrichtung unverändert bleibt, aber die Auftreffkraft wie erwähnt reduziert wird.

Ein besonderer Vorteil der Erfindung ist darin zu sehen, dass mehrere Strömungsumlenker an dem Wasserfahrzeug nachrüstbar sind. Beispielsweise an bestehenden Wasserfahrzeugen, also z.B. an Schuten können die Strömungsumlenker zu gegebener Zeit nachgerüstet werden.

Vorteilhafte Ausgestaltungen der Erfindung sind in den Unteransprüchen offenbart. Es zeigen:
Fig.1 eine Ansicht auf einen ersten Strömungskörper mit erfindungsgemäßen Strömungsumlenkern,
Fig. 2 eine Ansicht auf einen zweiten Strömungskörper mit erfindungsgemäßen Strömungsumlenkern,
Fig. 3 eine Ansicht auf einen dritten Strömungskörper beispielhaft als Bug eines Wasserfahrzeuges ausgeführt,
Fig. 4 eine Ansicht auf einen vierten Strömungskörper beispielhaft als Bug eines Wasserfahrzeuges ausgeführt, und
Fig. 5 eine Ansicht auf einen fünften Strömungskörper beispielhaft als Flugzeugflügel.

In den unterschiedlichen Figuren sind gleiche Teile stets mit denselben Bezugszeichen versehen, weswegen diese in der Regel auch nur einmal beschrieben werden.

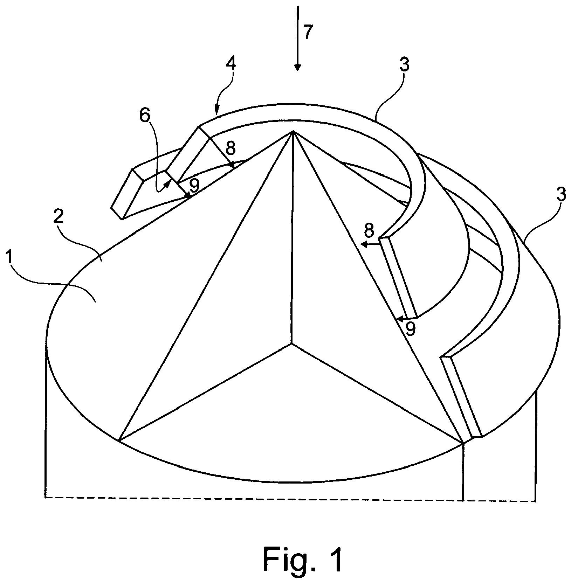

Figur 1 zeigt einen Strömungskörper 1, der in einer ersten Ausgestaltung beispielhaft als Kegelspitze 1 ausgeführt ist, und als solcher im Folgenden bezeichnet wird. Die Kegelspitze 1 weist eine kegelförmige Grundfläche 2 auf, welche für Strömungsmedien einen Strömungswiderstand bildet.

An der Kegelspitze 1 sind zwei Strömungsumlenker 3 angeordnet, die jeweils eine Einströmseite 4 und eine Ausströmseite 6 aufweisen. Die Einströmseite 4 ist in Strömungsrichtung (Pfeil 7) des Strömungsmediums vor der Ausströmseite 6 angeordnet. Der Strömungsumlenker 3 weist an seiner Einströmseite 4 einen Abstand zur Grundfläche 2 auf, der größer ist als der Abstand der Ausströmseite 6 zur Grundfläche 2, was durch die Pfeile 8 und 9 erkennbar ist.

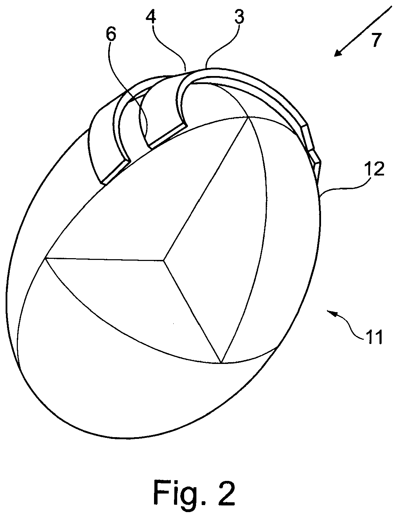

Figur 2 zeigt einen Strömungskörper 11, der in einer zweiten Ausgestaltung beispielhaft olivenartig, also im Längsschnitt gesehen ellipsoid ausgeführt ist. Der Strömungskörper 11 weist eine Grundfläche 12 auf, welche für Strömungsmedien einen Strömungswiderstand bildet.

An dem Strömungskörper 11 sind ebenfalls zwei Strömungsumlenker 3 angeordnet, die jeweils eine Einströmseite 4 und eine Ausströmseite 6 aufweisen. Die Einströmseite 4 ist in Strömungsrichtung (Pfeil 7) des Strömungsmediums vor der Ausströmseite 6 angeordnet. Der Strömungsumlenker 3 weist an seiner Einströmseite 4 einen Abstand zur Grundfläche 2 auf, der größer ist als der Abstand der Ausströmseite 6 zur Grundfläche 2.

Die Strömungsumlenker 3 gemäß den Figuren 1 und 2 umfassen den jeweiligen Strömungskörper 1 bzw. 11 jeweils vollumfänglich.

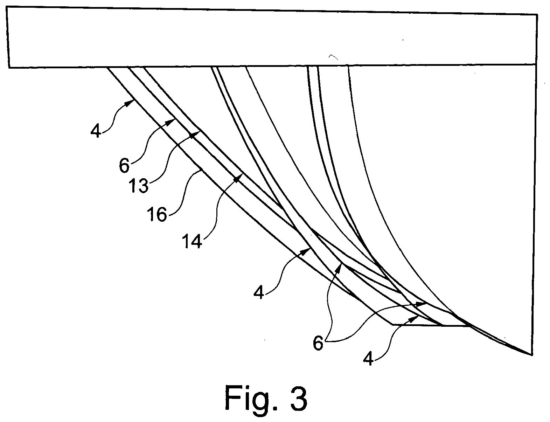

In Figur 3 ist ein weiterer Strömungskörper 13 gemäß der Erfindung als Bug 13 eines Wasserfahrzeuges dargestellt. Die Fläche des Bugs 13 bildet die Grundfläche 14. Das Wasserfahrzeug ist beispielhaft eine Schute mit profilierten Bug 13. Bei der in Figur 3 gewählten Darstellung ist eine Seite des Bugs 13 erkennbar. Beispielhaft ist dies die linke Seite des Bugs 13. Die dazu gegenüber liegende Seite, also die rechte Seite des Bus 13 ist in Figur 3 verdeckt, bevorzugt aber identisch ausgeführt.

An dem Bug 13 sind auf der dargestellten linken Seite drei Strömungsumlenker 16 angeordnet. Die Strömungsumlenker 16 erstrecken sich entlang der Buglinie in der Zeichnungsebene von oben nach unten. Entsprechend den zu Figur 1 und 2 beschriebenen Ausgestaltungen weist der Strömungsumlenker 16 an seiner Einströmseite 4 einen Abstand zur Grundfläche 14 auf, der größer ist als der Abstand der Ausströmseite 6 zur Grundfläche 14. Gemäß der Erfindung ist das Abstandsverhältnis 2:1.

Die drei Strömungsumlenker 16 sind in der Zeichnungsebene oben und unten angeschrägt angeschnitten, aber einander ungleich und folgen jeweils dem Profil des Bugs 13.

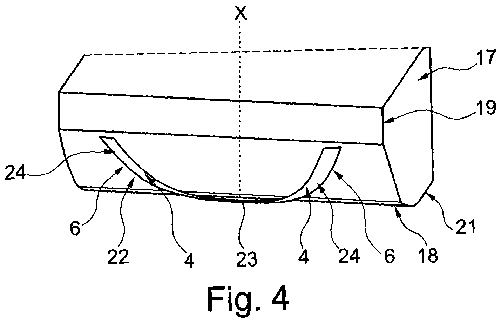

In Figur 4 ist ein Strömungskörper 17 als Schute 17 mit ihren Bug 18 ausschnittsweise dargestellt. Der Bug 18 weist als Profilierung eine von oben unten verlaufende Krümmung, also ein durchgehende Bugwölbung auf, die sich von einem oberhalb der Wasserlinie angeordneten Bugbereich 19 in Richtung zum Kiel 21 erstreckt. Der Bug 18 bildet die Grundfläche 18. An der Grundfläche 18 ist ein quasi parabelförmig angeordneter Strömungsumlenker 22 angeordnet. Dessen Einströmseite 4 weist einen größeren Abstand zur Grundfläche 18 auf als dessen Ausströmseite 6. Der Strömungsumlenker 22 ist nach oben hin, also zur Wasseroberfläche geöffnet ist. An seinem bevorzugt mit der Mittellinie X des Bugs 18 deckungsgleich ergebenden Zenit 23 weist der betreffende Strömungsumlenker 22 seinen tiefsten Punkt auf, wobei sich beide Schenkel 24 kurvig verlaufend mit den genannten Abständen zur Grundkörperoberfläche in Richtung zur Wasseroberfläche erstrecken. Der Strömungsumlenker 22 weist so eine auf die Mittellinie X des Bugs 18 bezogene Innenkante und eine dazu gegenüberliegende Außenkante auf. Die Innenkante entspricht der Einströmseite 4, wobei die Außenkante der Ausströmseite 6 entspricht. Zusätzlich zu dem dargestellten Strömungsumlenker 22 können bezogen auf die Mittellinie X noch weitere Strömungsumlenker an der Grundfläche 18 vorgesehen sein. Die beiden Schenkel 24 können im Zenit 23 zumindest teilweise miteinander verbunden sein. Insofern kann der Strömungsumlenker 22 auch aus mehreren Teilsegmenten bestehen, die an ihrer Verbindungsstelle drehbar gelagert sind, so dass auch die Wirkrichtung der Strömungsumlenker 22 umkehrbar ist. Die Umkehrung der Wirkrichtung ist auch bei den bereits beschriebenen Strömungsumlenkern möglich.

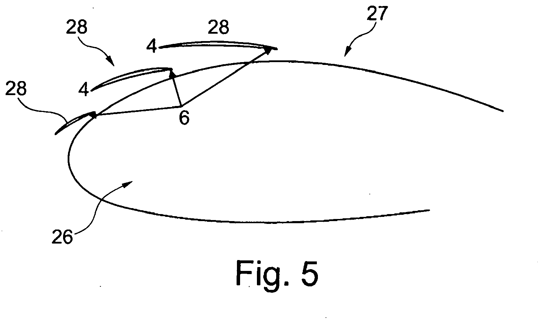

Bei dem in Figur 5 dargestellten Beispiel ist als Strömungskörper 26 beispielhaft ein Flugzeugflügel 26 dargestellt. An dessen Oberseite 27 sind Strömungsumlenker 28 angeordnet. Deren Einströmseite 4 weist jeweils einen größeren Abstand zur Grundfläche auf als deren Ausströmseite 6. Gemäß dem nach Figur 5 kann der Strömungsumlenker 28 auch in seiner Quererstreckung gebogen, also gewölbt ausgeführt sein, was so auch für die bereits beschriebenen Strömungsumlenker gelten kann. Möglich ist sogar den Strömungsumlenker mit einem Querschnitt ähnlich oder identisch einem Tragflügelprofil auszuführen. Auch bei Schienen gebundenen oder Schienen ungebundenen Fahrzeugen, also zum Beispiel bei Zügen kann eine solche Profilgestaltung zielführend sein.

In den Figuren 1 bis 5 sind Befestigungsstege, mit denen der jeweilige Strömungsumlenker 3,16,22,28 mit der jeweiligen Grundfläche 2,12,14,18,27 verbunden ist, nicht dargestellt.

Ein Medium, also Wasser strömt so zwischen der Innenseite des Strömungsumlenkers 3,16,22,28 und der Grundfläche 2,12,14,18,27 des Strömungskörpers 1,11,13,17,26 entlang. So wird erreicht, dass das Medium nicht mehr direkt auf die Grundfläche 2,12,14,18,27 auftrifft. Die auftreffende Medienströmung wird vielmehr parallel zur Grundfläche 2,12,14,18,27 umgeleitet, so dass der Strömungswiderstand verringert wird. Die Hauptströmungsrichtung des Mediums bleibt unverändert. So ist eine Reduzierung der aufzubringenden Vorschubenergie zu erwarten. Auch wird die effektive Auftreffkraft des Mediums auf die Grundfläche 2,12,14,18,27 reduziert, da das Medium nicht mehr direkt auf die Grundfläche 2,12,14,18,27 auftrifft. Die Auftreffkraft kann, bezogen auf einen Strömungskörper 1,11,13,17,26 ohne Strömungsumlenker, quasi halbiert werden, woraus eine Reduzierung des Strömungswiderstandes beispielsweise um 28% resultieren kann. Natürlich können auch mehr oder weniger als die dargestellten Strömungsumlenker 3,16,22,28 an den Grundflächen 2,12,14,18,27 angeordnet werden.

### Bezugszeichenliste:

- 1: Strömungskörper
- 2: Grundfläche
- 3: Strömungsumlenker
- 4: Einströmseite
- 5:
- 6: Ausströmseite
- 7: Strömungsrichtung
- 8: Abstandspfeil
- 9: Abstandspfeil
- 10:
- 11: Strömungskörper
- 12: Grundfläche
- 13: Strömungskörper
- 14: Grundfläche
- 15:
- 16: Strömungsumlenker
- 17: Strömungskörper
- 18: Bug/Grundfläche
- 19: Bugbereich
- 20:
- 21: Kiel
- 22: Strömungsumlenker
- 23: Zenit
- 24: Schenkel
- 25:
- 26: Strömungskörper/Flugzeugflügel
- 27: Oberseite
- 28: Strömungsumlenker

## Patentansprüche

1. Wasserfahrzeug mit einem Bug (13, 18), welcher für Strömungsmedien einen Strömungswiderstand bildet,
**dadurch gekennzeichnet, dass**
auf jeder Seite des Bugs (13,18), also rechts und links bezogen auf dessen Mittelbereich mehrere Strömungsumlenker (16,22) angeordnet sind, die sich entlang einer Buglinie von oben nach unten aus der Richtung eines Schiffsdecks in Richtung eines Schiffsrumpfs erstrecken, wobei jeder Strömungsumlenker (16,22) an seiner Einströmseite (4) einen doppelt so großen Abstand zum Bug (13, 18) aufweist als an seiner Ausströmseite (6) und wobei die Strömungsumlenker (16,22) einen viereckigen Querschnitt aufweisen, und wobei jeder Strömungsumlenker (16,22) über Befestigungsstege in seinem Anstellwinkel zum Bug (13, 18) veränderbar ist.

2. Wasserfahrzeug nach Anspruch 1, **dadurch gekennzeichnet, dass** die Strömungsumlenker (16,22) senkrecht zur Hauptströmungsrichtung des Mediums angeordnet sind.

3. Wasserfahrzeug nach einem der vorhergehenden Ansprüche, **dadurch gekennzeichnet, dass** die Strömungsumlenker (16,22) länger sind als brelt.

4. Wasserfahrzeug nach einem der vorhergehenden Ansprüche, **dadurch gekennzeichnet, dass** jeder Strömungsumlenker (16,22) ein Blechprofil, bevorzugt ein Flachprofil ist.

5. Wasserfahrzeug nach einem der vorhergehenden Ansprüche, **dadurch gekennzeichnet, dass** die Strömungsumlenker (16,22) mittels den Befestigungsstegen an dem Bug (13, 18) angebunden sind.

## Claims

1. A watercraft with a bow (13, 18), which forms a flow resistance for flow media,
**characterised in that**
a plurality of flow deflectors (16, 22) are arranged on each side of the bow (13, 18), i.e. to the right and left related to its central region, which flow deflectors extend along a bow line from top to bottom from the direction of a ship's deck in the direction of a shift's hull, wherein each flow deflector (16, 22) has a distance from the bow (13, 18) which at its inflow side (4) is twice as great as at its outflow side (6) and wherein the flow deflectors (16, 22) have a rectangular cross-section, and wherein each flow deflector (16, 22) can be varied in its setting angle to the bow (13, 18) by means of fixing webs.

2. The watercraft according to claim 1, **characterised in that** the flow deflectors (16, 22) are arranged at right angles to the main flow direction of the medium.

3. The watercraft according to any one of the preceding claims, **characterised in that** the flow deflectors (16, 22) are longer than wide.

4. The watercraft according to any one of the preceding claims, **characterised in that** each flow deflector (16, 22) is a sheet metal profile, preferably a flat profile.

5. The watercraft according to any one of the preceding claims, **characterised in that** the flow deflectors (16, 22) are attached by means of fixing webs to the bow (13, 18).

## Revendications

1. Engin nautique comprenant une proue (13, 18), qui forme une résistance à l'écoulement pour des milieux circulants, **caractérisé en ce que** sur chaque côté de la proue (13, 18), donc à droite et à gauche en rapport à la zone centrale de celle-ci sont placés plusieurs inverseurs d'écoulement (16, 22) qui s'étendent le long d'une ligne de proue, du haut vers le bas, à partir de la direction d'un pont de bateau en direction d'une coque de bateau, chaque inverseur d'écoulement (16, 22) présentant sur son côté affluence (4) un écart par rapport à la proue (13, 18) qui correspond au double de celui sur son côté écoulement (6) et les inverseurs d'écoulement (16, 22) présentant une section transversale carrée, et chaque inverseur d'écoulement (16, 22) étant variable par l'intermédiaire de barrettes de fixation au niveau de son angle d'attaque par rapport à la proue (13, 18).

2. Engin nautique selon la revendication 1, **caractérisé en ce que** les inverseurs d'écoulement (16, 22) sont placés à la perpendiculaire de la direction d'écoulement principale du milieu.

3. Engin nautique selon l'une quelconque des revendications précédentes, **caractérisé en ce que** les inverseurs d'écoulement (16, 22) sont plus longs que larges.

4. Engin nautique selon l'une quelconque des revendications précédentes, **caractérisé en ce que** chaque inverseur d'écoulement (16, 22) est un profilé en tôle, de préférence un profilé plat.

5. Engin nautique selon l'une quelconque des revendications précédentes, **caractérisé en ce que** les inverseurs d'écoulement (16, 22) sont attaches à la proue (13, 18) à l'aide des barrettes de fixation.
